# EUROPÄISCHE PATENTANMELDUNG

(11) **EP 4 376 452 A1**
(43) Veröffentlichungstag der Anmeldung: **29.05.2024**
(21) Anmeldenummer: 22209850.1
(22) Anmeldetag: 28.11.2022
(51) Int. Cl.: H04W 4/70, H04L 67/10, H04L 67/12, H04L 67/55, H04L 67/562

(54) **VERFAHREN ZUM BETREIBEN EINER APPLIKATION MIT ZUMINDEST ZWEI KOMMUNIKATIONSANWEISUNGEN IN EINEM KOMMUNIKATIONSNETZWERK UND COMPUTER-PROGRAMMPRODUKT**

(71) Anmelder: Siemens Aktiengesellschaft, 80333 München (DE)
(72) Erfinder: Sauer, Markus, 81739 München (DE); Sedlacek, Matous, 84034 Landshut (DE)
(74) Vertreter: Siemens Patent Attorneys

(57) **Zusammenfassung**

Bei computer-implementierten Verfahren zum Betreiben einer Applikation mit zumindest zwei Kommunikationsanweisungen in einem Netzwerk in Gestalt eines Kommunikationsnetzwerks auf Applikationsebene wird oder ist jeder der Kommunikationsanweisungen eine Anforderung an die zumindest eine Datenfluss-Qualität einer mit der Kommunikationsanweisung angewiesenen Kommunikation zugewiesen und jeder Kommunikationsanweisung wird zumindest eine Netzwerkfunktion abhängig von der Anforderung an die zumindest eine Datenfluss-Qualität zugeordnet und es werden die Kommunikationsanweisungen mittels der jeweils zugeordneten Netzwerkfunktionen durchgeführt.

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Betreiben einer Applikation mit zumindest zwei Kommunikationsanweisungen in einem Kommunikationsnetzwerk und ein Computer-Programmprodukt.

In industriellen Umgebungen, insbesondere im Bereich des industriellen Internets-der-Dinge, werden software-basierte Applikationen zunehmend als hoch-verteilte und nur schwach miteinander gekoppelte, dienst-orientierte Architekturen realisiert. Für solche verteilten Systeme ist die Datenfluss-Qualität, d. h. die sogenannte Quality-of-Service (QoS), regelmäßig ein relevanter Parameter.

Datenfluss-Qualitäten können insbesondere durch eine Persistenz, Latenz, Verlässlichkeit und sonstigen Parametern von Kommunikationsverbindungen gegeben sein. Solche Datenfluss-Qualitäten können im Bereich der Publish-Subscribe-Kommunikation publisherseitig und/oder subscriberseitig festgelegt und spezifiziert werden und sind regelmäßig fest in der Kommunikation konfiguriert und/oder festgelegt.

Das Betreiben von Applikationen in verteilten Systemen umfassen regelmäßig die Durchführung einer Vielzahl von Kommunikationsvorgängen. Um allen Anforderungen an die Datenfluss-Qualitäten der Kommunikationsvorgänge zu genügen, muss das der Applikation zugrunde liegende Kommunikationsnetzwerk regelmäßig hinsichtlich mehrerer Datenfluss-Qualitäten zugleich optimiert sein. Dies erfordert eine aufwendige und teure Infrastruktur.

Es ist daher Aufgabe der Erfindung, ein verbessertes Verfahren zum Betreiben einer Applikation mit zumindest zwei Kommunikationsanweisungen in einem Kommunikationsnetzwerk anzugeben, welches insbesondere geringere Ansprüche an die Infrastruktur stellt. Ferner ist es Aufgabe der Erfindung, ein verbessertes Computerprogramm-Produkt zu schaffen, welches die Durchführung des verbesserten Verfahrens ermöglicht.

Diese Aufgabe der Erfindung wird mit einem Verfahren zum Betreiben einer Applikation mit zumindest zwei Kommunikationsanweisungen in einem, insbesondere logischen, Kommunikationsnetzwerk mit den in Anspruch 1 angegebenen Merkmalen sowie mit einem Computer-Programmprodukt mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen computer-implementierten Verfahren zum Betreiben einer Applikation mit zumindest zwei Kommunikationsanweisungen in einem Netzwerk in Gestalt eines, insbesondere logischen, Kommunikationsnetzwerks auf Applikationsebene wird oder ist jeder der Kommunikationsanweisungen eine Anforderung an die zumindest eine Datenfluss-Qualität einer mit der Kommunikationsanweisung angewiesenen Kommunikation zugewiesen und jeder Kommunikationsanweisung wird zumindest eine Netzwerkfunktion abhängig von der Anforderung an die zumindest eine Datenfluss-Qualität zugeordnet und es werden die Kommunikationsanweisungen mittels der jeweils zugeordneten Netzwerkfunktionen durchgeführt.

Mittels des erfindungsgemäßen Verfahrens kann folglich jedem der Kommunikationsvorgänge jeweils eine oder mehrere Datenfluss-Qualitäten zugewiesen werden oder jedem der Kommunikationsvorgänge ist jeweils eine oder mehrere Datenfluss-Qualitäten zugewiesen und mittels des Zuordnens jeweils zumindest einer Netzwerkfunktion zur Kommunikationsanweisung der Datenfluss-Qualität kann jeweils die erforderliche Datenfluss-Qualität einfach realisiert werden. Folglich sind erfindungsgemäß vorteilhaft nicht sämtliche Datenfluss-Qualitäten für alle Kommunikationsvorgänge zu gewährleisten, sondern es können die Netzwerkfunktionen nach Anforderung an die zumindest eine Datenfluss-Qualität geeignet gewählt werden.

Vorzugsweise wird bei dem computer-implementierten Verfahren gemäß der Erfindung die zumindest eine Netzwerkfunktion abhängig von der Anforderung an die zumindest eine Datenfluss-Qualität mittels einer Zuordnungsdatenbank und/oder einer Zuordnungsanweisung zugeordnet, wobei die Zuordnungsdatenbank und/oder Zuordnungsanweisung insbesondere Zuordnungen von Datenfluss-Qualitäten zu Netzwerkfunktionen aufweist. Vorteilhaft kann für ein eingerichtetes Netzwerk eine solche Zuordnungsdatenbank und/oder Zuordnungsanweisung aufgebaut oder gebildet werden werden und nachfolgend für eine Vielzahl von Kommunikationsvorgängen genutzt werden, solange sich das Netzwerk nicht ändert. Umgekehrt kann bei einer Änderung des Netzwerks die Zuordnungsdatenbank und/oder die Zuordnungsanweisung jeweils zentral angepasst werden, sodass die die Auflösung von Netzwerkfunktionen für eine geforderte Datenfluss-Qualität allein mittels der Zuordnungsdatenbank und/oder Zuordnungsanweisung erfolgen kann und für die jeweiligen Kommunikationsvorgänge nicht eigens eine Änderung des Netzwerks explizit berücksichtigt werden muss.
In einer bevorzugten Weiterbildung des erfindungsgemäßen computer-implementierten Verfahrens bilden die Kommunikationsanweisungen Anweisungen für eine Publish-Subscribe-Kommunikation. In dieser Weiterbildung lässt sich vorteilhaft das Publish-Subscribe-Paradigma für die Kommunikationsanweisungen im Netzwerk nutzen. Bei dem computer-implementierten Verfahren gemäß der Erfindung umfassen oder bilden die Kommunikationsanweisungen bevorzugt Publish-Anweisungen und/oder Subscribe-Anweisungen.

Vorzugsweise ist bei dem computer-implementierten Verfahren gemäß der Erfindung das Netzwerk ein 5G- und/oder 6G-Netzwerk. Insbesondere 5G- und/oder 6G-Netzwerke werden vorteilhaft erweitert.

Bei dem computer-implementierten Verfahren bildet in einer vorteilhaften Weiterbildung der Erfindung die Applikationsebene einen Layer 7.

Bei dem computer-implementierten Verfahren gemäß der Erfindung ist die zumindest eine Netzwerkfunktion vorzugsweise mit einem 5G-QoS-Identifier versehen. Mittels eines 5G-QoS-Identifiers kann eine Zuordnung von Netzwerkfunktionen zu einer angeforderten Datenfluss-Qualität besonders leicht erfolgen, da die durch die Netzwerkfunktion ermöglichte Datenfluss-Qualität anhand des 5G-QoS-Identifiers explizit realisiert werden kann.

Vorteilhaft wird bei dem computer-implementierten Verfahren gemäß der Erfindung die Anforderung an die zumindest eine Datenfluss-Qualität abhängig von einem Kommunikationskontext bestimmt. Mittels des Kommunikationskontextes können insbesondere Anforderungen an eine Latenz und/oder eine Datenrate und/oder eine zeitliche Rate von Kommunikationsvorgängen leicht abgeleitet werden und somit den jeweiligen Kommunikationsvorgängen zugeordnet werden.

Bei dem computer-implementierten Verfahren ist der Kommunikationskontext vorteilhaft eine Information über den Ort eines die Applikation implementierenden Geräts. Alternativ oder zusätzlich ist bei dem computer-implementierten Verfahren gemäß der Erfindung der Kommunikationskontext eine Information über einen Betreiber eines die Applikation implementierenden Geräts.

Das erfindungsgemäße Computer-Programmprodukt ist eingerichtet, ein erfindungsgemäßes computer-implementiertes Verfahren wie vorhergehend beschrieben auszuführen, wenn es auf einem Rechner ausgeführt wird.

Zweckmäßig wird bei dem erfindungsgemäßen Verfahren das Gerät mit der Applikation in dem Netzwerk betrieben.

Nachfolgend wird die Erfindung anhand eines in der Zeichnung dargestellten Ausführungsbeispiels näher erläutert.

Es zeigen:
- Figur 1: zeigt ein Ausführungsbeispiel zur Ausführung des erfindungsgemäßen Verfahrens schematisch in einer Prinzipskizze und
- Figur 2: eine Abbildung von Netzwerkfunktionen zu Kommunikationsanweisungen, welche bei dem Ausführungsbeispiel gemäß Fig. 1 herangezogen wird, schematisch in einer Prinzipskizze.

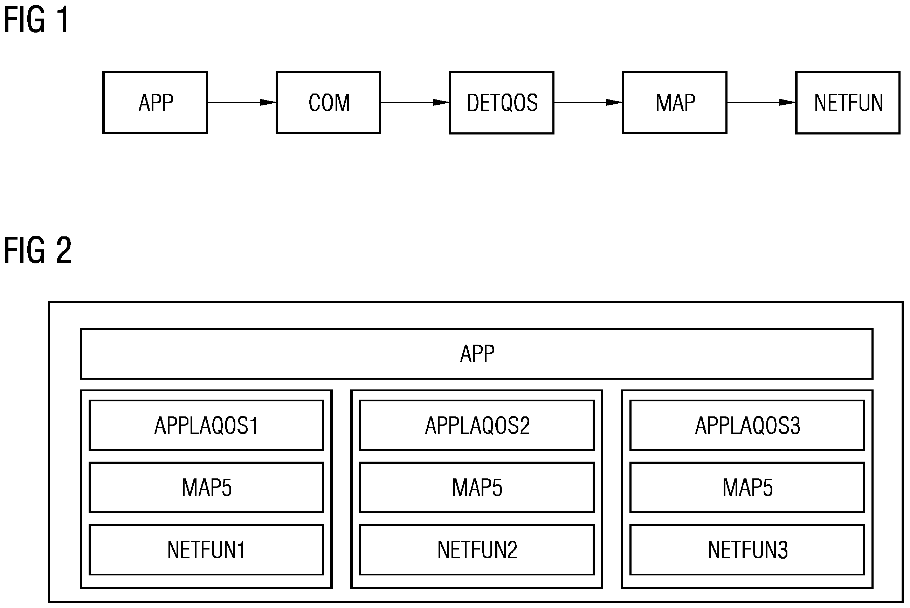

Bei dem in Fig. 1 dargestellten Verfahren wird eine Applikation APP betrachtet, welche zur Ausführung auf einem Gerät in einem 5G-Netzwerk eingerichtet ist. In weiteren Ausführungsbeispielen, welche dem dargestellten Ausführungsbeispiel im Übrigen entsprechen, kann anstelle des 5G-Netzwerks auch ein 6G-Netzwerk oder ein sonstiges Kommunikationsnetzwerk vorgesehen sein.

Die Applikation APP wird in Kommunikationsvorgänge COM zergliedert, welche jeweils Kommunikationsvorgänge COM auf Layer-7 bilden, d. h. Kommunikationsvorgänge COM, welche sich als Application-Layer-Prozesse beschreiben lassen.

Die Applikation APP bildet eine Publish-Subscribe-Anwendung, wobei die Kommunikationsvorgänge COM vorliegend Publish- und Subscribe-Vorgänge darstellen. Die Kommunikationsvorgänge erfordern je nach Kommunikationstext unterschiedliche Datenfluss-Qualitäten. So können Kommunikationsvorgänge APPLAQOS1 sporadische, deterministische Kommunikation erfordern, etwa weil sich das Gerät nicht innerhalb einer zusätzlich authentizitätsgesicherten Zone eines Produktionsstandorts befindet, sodass die Legitimität der Kommunikation mittels Sicherheitsüberprüfungen sporadisch geprüft werden muss. Andere Kommunikationsvorgänge APPLAQOS2 erfordern Kommunikation mit geringer Latenz und in Echtzeit, d. h. diese Kommunikationsvorgänge APPLAQOS2 können etwa eine Fernwartung mit ServicePersonal betreffen, sodass diese Kommunikationsvorgänge eine Direktverbindung mit verzögerungsfreier Datenübertragung erfordern, beispielsweise Videodaten aus einer Produktionsumgebung.

Weitere Kommunikationsvorgänge APPLAQOS3 erfordern einen raschen Kommunikationsaufbau bei Neuverbindung, etwa ein flexibel verbindbares Produktionsgerät, welches in eine Produktionsumgebung eingebunden wird oder ein autonomes Transportfahrzeug, welches sich in eine Produktionsumgebung hineinbewegt, um flexibel in die Produktionsumgebung eingebunden zu werden. Dabei bildet etwa eine hinreichend große Persistenz eine Datenfluss-Qualität, welche ein Late Joining ermöglicht.

Wie in Fig. 1 gezeigt wird anhand des jeweiligen Kommunikationsvorgangs COM anhand des jeweiligen Kommunikationskontexts wie oben beschrieben eine Datenfluss-Qualität in einem Zuordnungsschritt DETQOS zugeordnet. Alternativ kann in weiteren, nicht eigens dargestellten Ausführungsbeispielen anstelle des Kommunikationskontexts auch seitens des Users über eine Benutzerschnittstelle oder seitens des Programmierers über eine Programmierschnittstelle direkt eine Datenfluss-Qualität festgelegt werden.

Die Kommunikation der Applikation APP im 5G-Netzwerk erfolgt mit Publish-Subscribe-Kommunikation. Die Kommunikationsvorgänge APPLAQOS1, APPLAQOS2, APPLAQOS3 sind folglich Publish-Kommunikationsvorgänge und Subscribe-Kommunikationsvorgänge.

In an sich bekannter Weise werden bei der Publish-Subscribe-Kommunikation die Kommunikationsknoten für die Bereitstellung von Abonnementdaten sowie die abonnierenden Knoten miteinander verbunden, sodass auf eine detaillierte Darstellung insoweit vorliegend verzichtet wird.

Die Kommunikationsvorgänge APPLAQOS1, APPLAQOS2, APPLAQOS3 werden mit den jeweils erforderlichen Datenfluss-Qualitäten initiiert, indem jedem der Kommunikationsvorgänge APPLAQOS1, APPLAQOS2, APPLAQOS3 die erforderlichen Datenfluss-Qualitäten einer der Initiierungsparameter übergeben werden.

Es wird eine Datenflussrealisierungseinheit MAP5 herangezogen, welche in eine Abbildung der jeweils erforderlichen Datenfluss-Qualität auf eine 5G-Netzwerkfunktion mittels eines Zuordnungsschritts MAP vornimmt. Dazu enthält die Datenflussrealisierungseinheit MAP5 eine Datenbank, welche Zuordnungen zu einer Mehrzahl von Datenfluss-Qualitäten zu 5G-Netzwerkfunktionen NETFUN1, NETFUN2, NETFUN3 enthält, sodass die Datenflussrealisierungseinheit MAP für jede erforderliche Datenfluss-Qualität eine 5G-Netzwerkfunktion NETFUN1, NETFUN2, NETFUN3 ermitteln kann.

Die ermittelte Netzwerkfunktion NETFUN1, NETFUN2, NETFUN3 wird in einem Bereitstellungsschritt NETFUN der Applikation APP für die Kommunikationsvorgänge APPLAQOS1, APPLAQOS2, APPLAQOS3 bereitgestellt.

## Patentansprüche

1. Computer-implementiertes Verfahren zum Betreiben einer Applikation (APP) mit zumindest zwei Kommunikationsanweisungen (COM) in einem Netzwerk in Gestalt eines logischen Kommunikationsnetzwerks auf Applikationsebene, bei welchem jeder der Kommunikationsanweisungen (COM, APPLAQOS1, APPLAQOS2, APPLAQOS3) eine Anforderung an die zumindest eine Datenfluss-Qualität einer mit der Kommunikationsanweisung (COM, APPLAQOS1, APPLAQOS2, APPLAQOS3) angewiesenen Kommunikation zugewiesen (DETQOS) wird oder ist und bei welchem jeder Kommunikationsanweisung (COM, APPLAQOS1, APPLAQOS2, APPLAQOS3) zumindest eine Netzwerkfunktion (NETFUN1, NETFUN2, NETFUN3) abhängig von der Anforderung an die zumindest Datenfluss-Qualität zugeordnet (MAP) wird und bei welchem die Kommunikationsanweisungen (COM, APPLAQOS1, APPLAQOS2, APPLAQOS3) mittels Anweisung (NETFUN) der jeweils zugeordneten Netzwerkfunktionen (NETFUN1, NETFUN2, NETFUN3) durchgeführt werden.

2. Computer-implementiertes Verfahren nach dem vorhergehenden Anspruch, bei welchem die zumindest eine Netzwerkfunktion (NETFUN1, NETFUN2, NETFUN3) abhängig von der Anforderung an die zumindest eine Datenfluss-Qualität mittels einer Zuordnungsanweisung zugeordnet wird.

3. Computer-implementiertes Verfahren nach einem der vorhergehenden Ansprüche, bei welchem die Kommunikationsanweisungen (COM, APPLAQOS1, APPLAQOS2, APPLAQOS3) Anweisungen an eine Publish-Subscribe-Kommunikation bilden.

4. Computer-implementiertes Verfahren nach einem der vorhergehenden Ansprüche, bei welchem die Kommunikationsanweisungen (COM, APPLAQOS1, APPLAQOS2, APPLAQOS3) Publish-Anweisungen und/oder Subscribe-Anweisungen umfassen oder bilden.

5. Computer-implementiertes Verfahren nach einem der vorhergehenden Ansprüche, bei welchem das Netzwerk ein 5G- und/oder 6G-Netzwerk ist.

6. Computer-implementiertes Verfahren nach einem der vorhergehenden Ansprüche, bei welchem die Applikationsebene einen Layer 7 bildet.

7. Computer-implementiertes Verfahren nach einem der vorhergehenden Ansprüche, bei welchem die zumindest eine Netzwerkfunktion (NETFUN1, NETFUN2, NETFUN3) mit einem 5G-QoS-Identifier versehen ist.

8. Computer-implementiertes Verfahren nach einem der vorhergehenden Ansprüche, bei welchem die Anforderung an die zumindest eine Datenfluss-Qualität abhängig von einem Kommunikationskontext bestimmt wird.

9. Computer-implementiertes Verfahren nach einem der vorhergehenden Ansprüche, bei welchem der Kommunikationskontext eine Information über den Ort eines die Applikation (APP) implementierenden Geräts ist.

10. Computer-implementiertes Verfahren nach einem der vorhergehenden Ansprüche, bei welchem der Kommunikationskontext eine Information über einen Betreiber eines die Applikation (APP) implementierenden Geräts ist.

11. Computer-Programmprodukt, welches eingerichtet ist, ein computer-implementiertes Verfahren nach einem der vorhergehenden Ansprüche auszuführen, wenn es auf einem Rechner ausgeführt wird.
